# EUROPEAN PATENT APPLICATION

(11) **EP 4 585 910 A1**
(43) Date of publication of application: **16.07.2025**
(21) Application number: 23863514.8
(22) Date of filing: 07.09.2023
(51) Int. Cl.: G01N 21/64, G03F 7/00, C23F 1/02, C03C 17/36

(54) **QUALITY CONTROL SLIDE OF CELL COUNTING DEVICE, AND METHOD FOR MANUFACTURING SAME**

(30) Priority: 07.09.2022 KR 20220113730; 05.09.2023 KR 20230117940
(71) Applicant: Nanoentek, Inc., Seoul 08389 (KR)
(72) Inventor: JUNG, Kwang Hui, Hwaseong-si Gyeonggi-do 18615 (KR); KAN, Seok Joo, Suwon-si Gyeonggi-do 16363 (KR); KIM, Yu Rae, Hwaseong-si Gyeonggi-do 18484 (KR)
(74) Representative: advotec.
(86) International application number: PCT/KR2023/013378
(87) International publication number: WO 2024/054050

(57) **Abstract**

The present invention provides a quality control slide of a cell counting device, comprising: a base layer which is capable of transmitting light therethrough; a thin film layer which is formed on top of the base layer; a fluorescent layer which is formed on the thin film layer and expresses fluorescence by means of light transmitted through the base layer; and at least one cell marking part which is formed by piercing the thin film layer and through which the expressed fluorescence passes so as to be recognized as a cell.

## Description

### Technical Field

The present disclosure relates to a quality control slide of a cell counting device which counts cells and a method for manufacturing the same and, more particularly, to a quality control slide of a cell counting device which is capable of monitoring the accuracy and variability of a cell counting device from a quality control perspective by utilizing the principle of fluorescence emission, and a method for manufacturing the same.

### Background Art

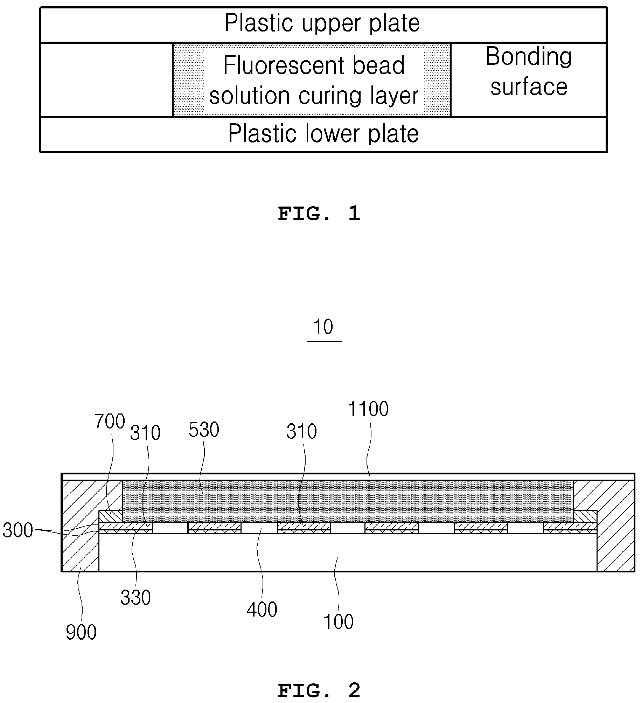

FIG. 1 illustrates a conventional quality control slide of a cell counting device. Referring to FIG. 1, the conventional quality control slide of a cell counting device (a QC slide or calibration slide) employs a method in which a fluorescent bead solution is injected into a chamber, dispersed throughout the chamber, cured, and fixed.

However, the conventional quality control slide of a cell counting device has the following problems due to the use of the fluorescent bead solution.

First, if the fluorescent bead solution is not properly dispersed, when the fluorescent bead solution is injected into the chamber, there may be variations among users due to aggregation or uneven distribution of beads. In addition, variations among users may occur due to a tool used during the injection, such as pipette, and size discrepancies may arise from the quality of the beads applied.

Meanwhile, the conventional quality control slide of a cell counting device as illustrated in FIG. 1 may cause the following several problems due to a manufacturing method thereof.

Specifically, in the existing manufacturing method, beads are distributed not only along X and Y axes of the chamber but also along a Z axis, and thus it is difficult to specify the focus value of the Z axis, thereby causing the variations.

In addition, when counting beads, a test is generally conducted in a state in which the beads are settled (gathered at a lowest surface), and the beads are distributed throughout the Z axis, which overlaps the phases of the beads, thereby causing variations in the results of the counting, and air bubbles may be generated while a curing solution is injected, thereby resulting in empty areas (areas without a fluorescent bead solution).

Furthermore, there are problems that errors may occur in the counting results because a volume value varies as much as difference in the height of a chamber, and the reliability of the counting results is reduced despite monitoring for regular quality control.

Accordingly, addressing these issues not only enhances convenience for users who perform regular quality control, but also compensates for errors caused by incorrect usage of a user or deviations caused by tools, etc. Furthermore, there is an increasing need for a quality control slide of a cell counting device that is capable of monitoring the accuracy of the cell counting device from a quality control perspective.

### Disclosure

### Technical Problem

The present disclosure is intended to provide a quality control slide of a cell counting device that can solve the problems of the existing quality control slide of a cell counting device mentioned above, and a method for manufacturing the same.

In particular, the present disclosure is intended to provide a quality control slide of a cell counting device which can provide convenience to users who conduct regular quality control monitoring and compensate for errors caused by incorrect usage methods by users of existing fluorescent bead solutions or deviations caused by tools, etc., and a method for manufacturing the same.

### Technical Solution

According to an aspect of the present disclosure, there is provided a quality control slide of a cell counting device, the quality control slide including: a base layer which allows light to pass therethrough; a thin film layer formed on top of the base layer; a fluorescent layer which is formed on top of the thin film layer and emits fluorescence due to the light passing through the base layer; and at least one cell-patterned region which is formed by penetrating the thin film layer and allows the emitted fluorescence to pass therethrough so as to be recognized as a cell.

The thin film layer may include two or more layers, and each of the layers may be made of a different type of metal.

The fluorescent layer may include a fluorescent dye.

The fluorescent dye may include at least one selected from a group consisting of Rhodamine B, Fluorethine Isothiocyanate (FITC), 4',6-diamidino-2-phenylindole (DAPI), Acridine Orange, HOECHST 33342, Nile blue, Peridinin-Chlorophyll-Protein (PerCP), and Phycoerythrin (PE).

The quality control slide of a cell counting device may include a jig which provides a space in which the fluorescent layer is formed, protects side walls of the slide, and is bonded to the slide.

The jig may be bonded to the side walls of the slide and be bonded to an adhesive layer formed on a portion of the thin film layer.

A size of the cell-patterned region may be adjusted by considering intensity of the fluorescence emitted from the fluorescent layer or microscope magnification.

According to another aspect of the present disclosure, there is provided a method for manufacturing a quality control slide of a cell counting device, the method including: a depositing step of depositing a thin film layer onto a base layer; a coating step of applying a photoresist in a solution state onto the thin film layer, heating the photoresist to evaporate a solvent, and exposing only necessary portions to ultraviolet rays; a developing step of dissolving the portions of the photoresist that have reacted with the ultraviolet rays in the coating step; an etching step of dissolving the thin film layer in portions onto which the photoresist is not applied by using an etchant after the developing step; and a remaining photoresist removing step of removing the photoresist remaining on the thin film layer after the etching step.

In the depositing step, the thin film layer may include two or more layers, wherein each of the layers may be deposited with a different type of metal.

The method for manufacturing a quality control slide of a cell counting device according to the present disclosure may further include: a bonding step of bonding a jig which provides a space, in which a fluorescent layer is formed, and protects side walls of the base layer after the remaining photoresist removing step.

The method for manufacturing a quality control slide of a cell counting device according to the present disclosure may further include a fluorescent layer forming step of forming a fluorescent layer by adding a fluorescent composition onto the thin film layer which has undergone the remaining photoresist removing step.

The fluorescent composition may include a transparent polymer resin, a curing agent, a fluorescent dye, and an organic solvent.

The fluorescent composition may be prepared by mixing a transparent polymer resin with a curing agent to prepare a transparent polymer resin solution, adding a fluorescent dye emitting in a target wavelength range to an organic solvent to prepare a fluorescent dye solution, mixing the transparent polymer resin solution and the fluorescent dye solution at atmospheric pressure, and removing microbubbles in a vacuum.

The transparent polymer resin may be a silicone-based polymer.

### Advantageous Effects

According to the present disclosure, there is an advantage of providing convenience to users conducting regular quality control monitoring and compensating for errors caused by incorrect usage by users by departing from the existing fluorescent bead solution injection method, and implementing cell shapes through the patterning of the thin film layer.

In addition, according to the present disclosure, there is an advantage of less size deviation because a photolithography process is applied during the manufacturing the thin film layer.

In addition, according to the present disclosure, there is an advantage that the patterning of the thin film layer allows cell shapes to be displayed as desired, thereby enabling the testing of counting for cells of various shapes.

In addition, according to the present disclosure, the measured size of a virtual cell simulating a cell stained with a fluorescent material may be adjusted by considering fluorescence emission intensity and microscope magnification.

In addition, according to the present disclosure, there is an advantage that a predetermined number of cells can be displayed through the patterning of the thin film layer, and thus the result value is always consistent, thereby accurately monitoring the performance of the cell counting device.

### Description of Drawings

FIG. 1 is a configuration diagram showing a conventional quality control slide of a cell counting device.
FIG. 2 is a cross-sectional view of the quality control slide of a cell counting device according to the embodiment of the present disclosure.
FIG. 3 is a photograph of a prototype of the quality control slide of a cell counting device according to the embodiment of the present disclosure.
FIG. 4 is an image of the quality control slide, which is captured by a measuring device, of a cell counting device according to the embodiment of the present disclosure.
FIG. 5 is a cross-sectional view showing a depositing step of a thin film layer according to the embodiment of the present disclosure.
FIG. 6 is a cross-sectional view showing a coating step according to the embodiment of the present disclosure.
FIG. 7 is a cross-sectional view showing a developing step of a photoresist according to the embodiment of the present disclosure.
FIG. 8 is a cross-sectional view showing an etching step of the thin film layer according to the embodiment of the present disclosure.
FIG. 9 is a cross-sectional view showing a remaining photoresist removing step according to the embodiment of the present disclosure.
FIG. 10 is a cross-sectional view and an exploded perspective view showing the bonding step of a jig according to the embodiment of the present disclosure.
FIG. 11 is a cross-sectional view and an exploded perspective view showing a fluorescent layer forming step according to the embodiment of the present disclosure.
FIG. 12 is a flowchart showing the manufacturing method of the quality control slide of a cell counting device according to the present disclosure.

### Best Mode

Hereinafter, the present disclosure is described in detail with reference to contents described in the attached drawings. However, the present disclosure is not limited or restricted by exemplary embodiments. The same reference numerals presented in each drawing indicate elements that perform substantially the same function.

The purposes and effects of the present disclosure may be naturally understood or made clearer by the following description, and the purposes and effects of the present disclosure are not limited to the description below. In addition, in describing the present disclosure, when it is determined that a detailed description of the publicly known technology related to the present disclosure may unnecessarily obscure the main point of the present disclosure, such detailed description will be omitted.

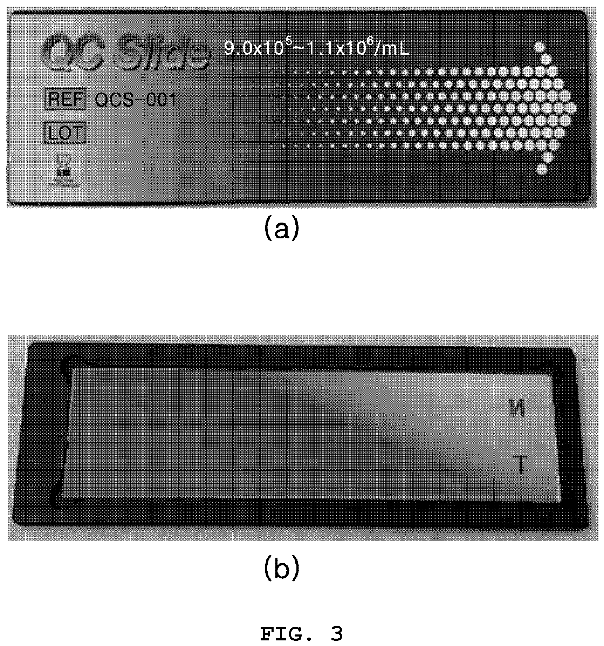

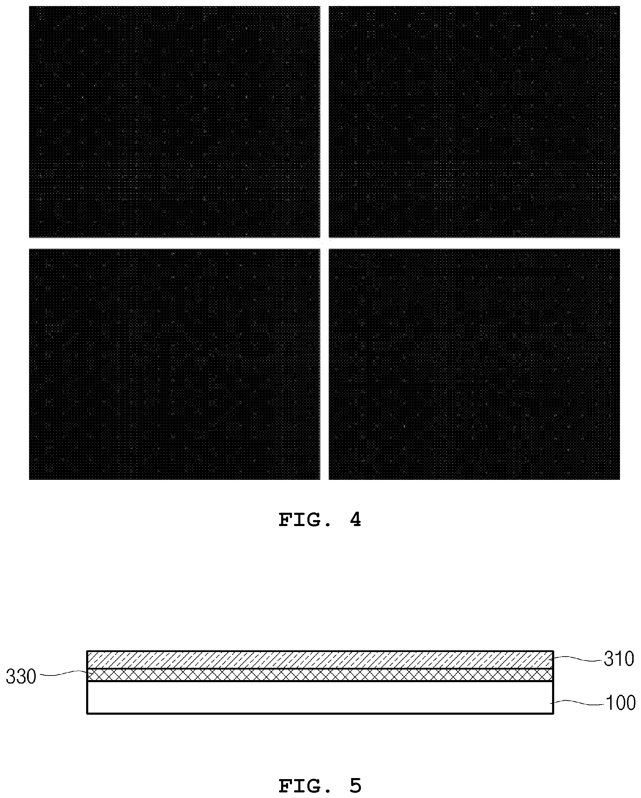

FIG. 2 is a configuration diagram of the quality control slide of a cell counting device according to the present disclosure, FIG. 3 is a photograph of a prototype of the quality control slide of a cell counting device according to the present disclosure, and FIG. 4 is an image of the quality control slide, which is captured by a measuring device, of a cell counting device according to the present disclosure.

Referring to FIGS. 2 to 4, the quality control slide 10 of a cell counting device according to an embodiment of the present disclosure may largely include a base layer 100 which allows light to pass therethrough; a thin film layer 300 formed on top of the base layer; a fluorescent layer 530 which is formed on top of the thin film layer 300 and emits fluorescence due to the light passing through the base layer 100; and at least one cell-patterned region 400 which is formed by penetrating the thin film layer 300 and allows the emitted fluorescence to pass therethrough so as to be recognized as a cell.

That is, the quality control slide 10 of a cell counting device includes the base layer 100, the thin film layer 300, the cell-patterned region 400, and the fluorescent layer 530, and may further include an adhesive layer 700, a jig 900, and a protective film 1100.

The quality control slide 10 of a cell counting device may provide convenience to users conducting regular quality control monitoring and compensate for errors caused by incorrect usage by users by departing from the existing fluorescent bead solution injection method and implementing cell shapes through the patterning of the thin film layer 300.

In addition, in the quality control slide 10 of a cell counting device according to an embodiment of the present disclosure, the patterning of the thin film layer 300 is performed by photolithography, so the sizes of patterns may be formed to be uniform, and accordingly, size deviation among the sizes of recognized cells may be small.

In addition, the quality control slide 10 of a cell counting device of the present disclosure may display cell shapes as desired through the patterning of the thin film layer 300, thereby enabling the testing of counting for cells of various shapes. Furthermore, the quality control slide 10 of a cell counting device of the present disclosure may display a predetermined number of cells through the patterning of the thin film layer 300, so that the result value is always consistent and there is almost no production deviation.

Meanwhile, in the quality control slide 10 of a cell counting device of the present disclosure, all of the patterns of the thin film layer 300 is at the same height (on a z axis) so that a focus thereof is set consistently, and the fluorescent layer 530 and the thin film layer 300 are completely shielded so as not to be contaminated, thereby minimizing the occurrence of counting errors.

The cell-patterned region 400 is formed by penetrating the thin film layer 300 and allows the emitted fluorescence to pass therethrough to be recognized as a cell. By adjusting the type of fluorescent material constituting the fluorescent layer 530 and the manufacturing condition, the intensity/wavelength, etc. of the fluorescence can freely be changed, thereby enabling the adjustment of the size of the recognized.

Meanwhile, to protect the fluorescent layer 530, the protective film 1100 may be adhered onto the fluorescent layer 530. Specifically, referring to FIG. 3(a), it can be seen that the quality control slide 10 of a cell counting device has the protective film 1100 present on an upper portion thereof.

In addition, as shown in FIG. 3(b), the quality control slide 10 of a cell counting device of the present disclosure has a base layer 100 in a lower portion thereof with the base layer made of a transparent material that allows light to pass through.

Accordingly, when light passing through the cell-patterned region 400 through the base layer 100 from a light source such as an LED is incident on the fluorescent layer 530, fluorescence is emitted from the fluorescent layer 530, and the fluorescence is observed to pass through the cell-patterned region 400, which is a patterned part (a perforated part) of the thin film layer 300, so that the part may be recognized as a cell.

Meanwhile, in the quality control slide 10 of a cell counting device according to an embodiment of the present disclosure, the diameter of the cell-patterned region 400 may be changed through a photolithography process to match a cell set as a target.

In addition, the quality control slide 10 of a cell counting device may adjust the measured size of a virtual cell that simulates a cell stained with a fluorescent material by adjusting emitted fluorescence intensity. Specifically, since the size of the cell-patterned region 400 is observed and recognized by diffraction and scattering of fluorescent light, the measured size of a virtual cell simulating a cell stained with a fluorescent material may be adjusted by considering fluorescence emission intensity and the microscope magnification. The adjustment of the emitted fluorescence intensity may be performed by adjusting the thickness of the fluorescent layer 100 and the concentration of a fluorescent material included in the fluorescent layer.

The thin film layer 300 may be composed of a first thin film layer 310 and a second thin film layer 330. The thin film layer 300 is deposited as two type of the thin film layer 300, having the first thin film layer 310 and the second thin film layer 330, so as to prevent the possibility of unintended holes other than the cell-patterned region 400 occurring during the deposition and manufacturing process.

The material of the first thin film layer 310 may preferably be one selected from a group consisting of Ti and Cr, and the material of the second thin film layer 330 may preferably be one selected from the group consisting of Ti and Cr. In this case, the materials of the first thin film layer 310 and the second thin film layer 330 may be different.

The fluorescent layer 530 is located on the top of the thin film layer 300 and may emit fluorescence due to incident light. In this case, the fluorescent layer 530 may be formed of a fluorescent composition. The fluorescent composition may be produced by mixing a transparent polymer resin solution containing a transparent polymer resin and a curing agent in a certain ratio and a fluorescent dye solution containing a fluorescent dye of a target wavelength range dissolved in an organic solvent, and then removing air bubbles in the mixed solutions.

The fluorescent dye may include at least one selected from a group consisting of Rhodamine B, Fluorethine Isothiocyanate (FITC), 4',6-diamidino-2-phenylindole (DAPI), Acridine Orange, HOECHST 33342, Nile blue, Peridinin-Chlorophyll-Protein (PerCP), and Phycoerythrin (PE).

The adhesive layer 700 may functions as an adhesive between the thin film layer 300 and the jig 900. The adhesive layer 700 may be formed of a transparent adhesive tape. The adhesive layer 700 may have a sufficient thickness to allow the fluorescent layer 530 to be formed. The jig 900 may provide a space in which the fluorescent layer 530 is formed, and protect the side walls of the base layer 100.

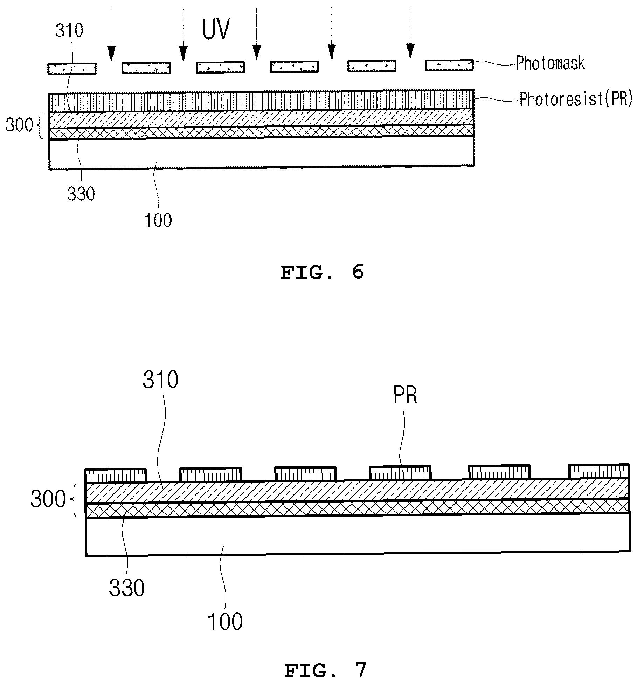

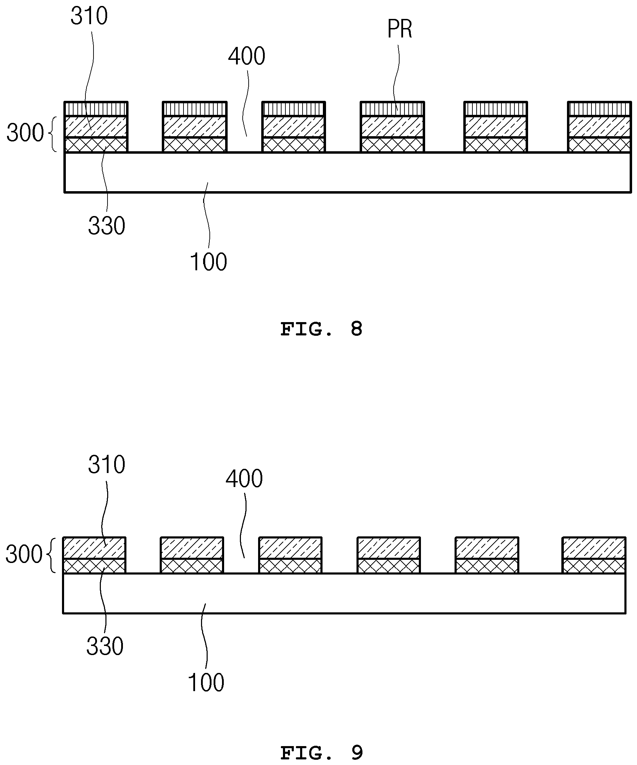

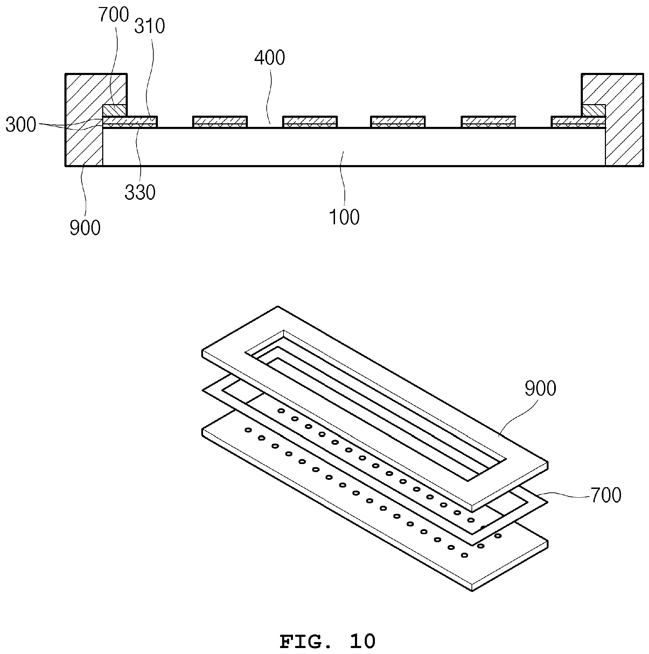

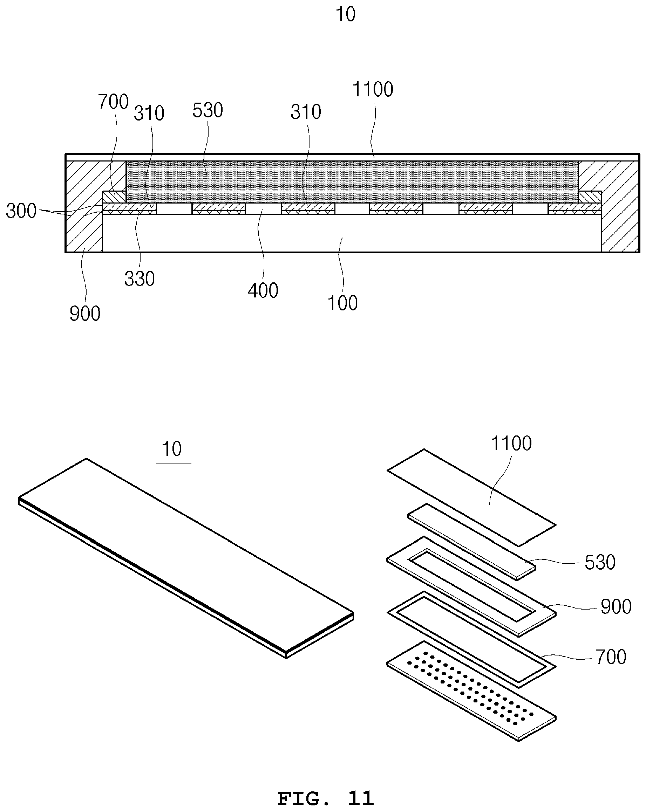

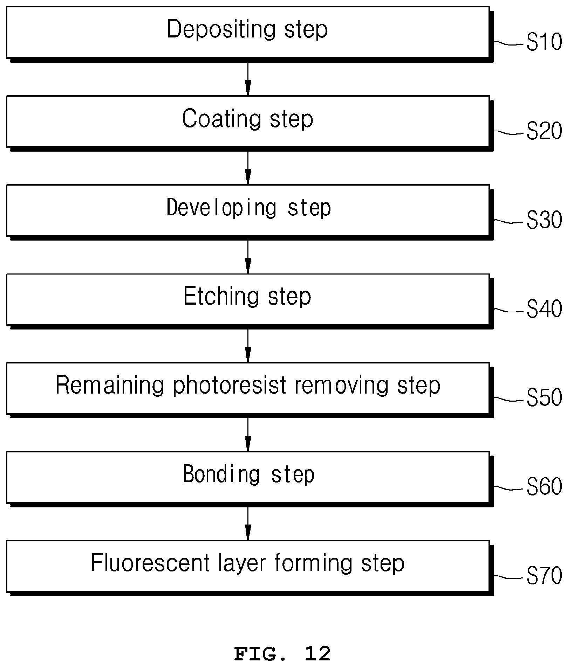

FIG. 5 is a cross-sectional view showing a depositing step of the thin film layer according to the embodiment of the present disclosure, FIG. 6 is a cross-sectional view showing a coating step according to the embodiment of the present disclosure, FIG. 7 is a cross-sectional view showing a developing step of a photoresist according to the embodiment of the present disclosure, FIG. 8 is a cross-sectional view showing an etching step of the thin film layer according to the embodiment of the present disclosure, FIG. 9 is a cross-sectional view showing a remaining photoresist removing step according to the embodiment of the present disclosure, and FIG. 10 is a cross-sectional view and an exploded perspective view showing the bonding step of the jig according to the embodiment of the present disclosure. FIG. 11 is a cross-sectional view and an exploded perspective view showing a fluorescent layer forming step according to the embodiment of the present disclosure, and FIG. 12 is a flowchart showing the manufacturing method of the quality control slide of a cell counting device according to the present disclosure.

Referring to FIGS. 5 to 12, a method for manufacturing a quality control slide of a cell counting device according to an embodiment of the present disclosure may include the depositing step S10, the coating step S20, the developing step S30, the etching step S40, the remaining photoresist removing step S50, the bonding step S60, and the fluorescent layer forming step S70.

As shown in FIG. 5, in the depositing step S10, the thin film layer 300 may be formed on the base layer 100.

In the depositing step S10, two types of the thin film layer 300, the first thin film layer 310 and the second thin film layer 330, are deposited, thereby preventing the possibility of unintended holes occurring during the depositing and manufacturing processes.

The material of the first thin film layer 310 may preferably be one selected from the group consisting of Ti and Cr, and the material of the second thin film layer 330 may preferably be one selected from the group consisting of Ti and Cr. In this case, the materials of the first thin film layer 310 and the second thin film layer 330 may be different.

As shown in FIG. 6, in the coating step in S20, photoresist in a solution state may be applied onto the thin film layer 300, and then heated to evaporate the solvent, and only necessary portions may be exposed to ultraviolet rays.

In the coating step in S20, the photoresist in the solution state may be applied onto the thin film layer 300 by spin coating and then heated on a hot plate to evaporate a solvent. After the solvent is evaporated, a photomask can be used to allow ultraviolet rays to pass only through the necessary pattern portions for reaction.

Meanwhile, as shown in FIG. 7, in the developing step S30, the portions of the photoresist that have reacted with the ultraviolet rays in the coating step S20 are dissolved by using a developer so that only portions to be patterned among the thin film layer 300 are exposed.

After that, as shown in FIG. 8, in the etching step S40 (wet etching), an etchant capable of dissolving the thin film layer 300 made of metal may be applied thereto, thereby dissolving the thin film layer 300 in portions which are exposed to the outside with the photoresist being not applied thereto.

In the etching step S40, portions in which photoresist is present are not etched because no etchant is applied thereto, and only the thin film layer 300 in portions in which photoresist is not present is etched. In this case, the etched photoresist-free portion functions as the cell-patterned region 400. In the etching step, when the thin film layer 300 has two or more layers, the second thin film layer 330 may be etched after the first thin film layer 310 is etched.

Meanwhile, as illustrated in FIG. 9, after the etching step S40, a photoresist coating layer PR remaining on the base layer 100 after etching the thin film layer 300 of the base layer 100 may be removed through the remaining photoresist removing step S50. In the remaining photoresist removing step S50, the photoresist coating layer PR may be removed by using acetone.

After the remaining photoresist removing step S50, the quality control slide 10 of a cell counting device to be applied may be cut to an appropriate size through dicing.

Referring to FIG. 10, in the bonding step S60, the jig 900 is bonded. The jig 900 may serve to provide a space in which the fluorescent layer 530 is formed and to protect the side walls of the base layer 100.

In this case, the adhesive layer 700 may be applied between the jig 900 and the thin film layer 300. As an example of the adhesive layer 700, an optical clear adhesive film with a predetermined thickness may be used.

Meanwhile, as shown in FIG. 11, in the fluorescent layer forming step S70, the fluorescent layer 530 may be formed on the thin film layer 300 etched in the etching step S40.

In the fluorescent layer forming step S70, after a fluorescent composition is introduced into an opening part formed by the jig 900, the fluorescent composition may be heated on a hot plate at a predetermined temperature and be cured to fix the fluorescent composition, thereby forming the fluorescent layer 530.

Here, the fluorescent composition may include a transparent polymer resin, a curing agent, a fluorescent dye, and an organic solvent.

Specifically, the fluorescent composition is prepared by mixing a transparent polymer resin with a curing agent to prepare a transparent polymer resin solution, and adding a fluorescent dye emitting in a target wavelength range to an organic solvent to prepare a fluorescent dye solution.

In addition, the fluorescent composition may be prepared by mixing the transparent polymer resin solution and the fluorescent dye solution at atmospheric pressure and then removing microbubbles in a vacuum. In this case, in the fluorescent layer forming step S70, fluorescence may preferably reach saturation by using a fluorescent dye, which is a fluorescent dye of the target wavelength range.

Certain fluorescent dyes exhibit fluorescence only when the fluorescent dyes are dissolved in a liquid, but when the liquid evaporates, the fluorescence is no longer exhibited. Therefore, it is preferable to form the fluorescent layer 530 by mixing a fluorescent dye dissolved in an organic solvent, a thinner, with a transparent polymer resin and then curing the mixture.

In this case, the fluorescent dye cannot be dissolved directly in the transparent polymer resin. Since water does not mix well with the transparent polymer resin, the fluorescent dye may be dissolved in a thinner, an organic solvent, and then mixed with the transparent polymer resin to evenly disperse the fluorescent dye in the transparent polymer resin.

Here, the transparent polymer resin, which is a silicone-based polymer (silicon oil), exists in a liquid state like oil and may be cured when heated after adding a curing agent thereto. The cured transparent polymer resin may be transformed into a form similar to elastic rubber.

Specifically, the fluorescent dye may include at least one selected from a group consisting of Rhodamine B, Fluorethine Isothiocyanate (FITC), 4',6-diamidino-2-phenylindole (DAPI), Acridine Orange, HOECHST 33342, Nile blue, Peridinin-Chlorophyll-Protein (PerCP), and Phycoerythrin (PE).

In addition, the organic solvent may include at least one selected from a group consisting of benzene, xylene, toluene, acetone, MEK, IPA, ethanol, chloroform, hexane, DMSO, toluene, and petroleum ether.

The transparent polymer resin may include at least one selected from a group consisting of PDMS, an EPOXY resin, a thermosetting acrylic resin, polyurethane (PUR), an alkyd resin, and a phenol resin. In addition, the transparent polymer resin may be a silicone-based polymer.

The curing agent may be a photocurable curing agent or a thermosetting curing agent, and preferably a thermosetting curing agent.

The quality control slide 10 of a cell counting device, which is finally manufactured, may have a label, the protective film 1100, attached to one surface thereof for the purpose of providing information about the slide and protecting the fluorescent layer 530.

Although the present disclosure has been described in detail through the representative embodiments, those skilled in the art to which the present disclosure belongs will understand that various modifications are possible with respect to the above-described embodiments without departing from the scope of the present disclosure. Therefore, the scope of the rights of the present disclosure should not be limited to the described embodiments, but should be determined by all changes or modifications derived from the equivalent concepts of the claims as well as the claims described below.

### <Description of the Reference Numerals in the Drawings>

10: Quality control slide of cell counting device
100: Base layer
300: Thin film layer
310: First thin film layer
330: Second thin film layer
400: Cell-patterned region
530: Fluorescent layer
700: Adhesive layer
900: Jig
1100: Protective film

## Claims

1. A quality control slide of a cell counting device, the quality control slide comprising:
a base layer which allows light to pass therethrough;
a thin film layer formed on top of the base layer;
a fluorescent layer which is formed on top of the thin film layer and emits fluorescence due to the light passing through the base layer; and
at least one cell-patterned region which is formed by penetrating the thin film layer and allows the emitted fluorescence to pass therethrough so as to be recognized as a cell.

2. The quality control slide of claim 1, wherein the thin film layer comprises two or more layers, and each of the layers is made of a different type of metal.

3. The quality control slide of claim 1, wherein the fluorescent layer comprises a fluorescent dye.

4. The quality control slide of claim 3, wherein the fluorescent dye comprises at least one selected from a group consisting of Rhodamine B, Fluorethine Isothiocyanate (FITC), 4',6-diamidino-2-phenylindole (DAPI), Acridine Orange, HOECHST 33342, Nile blue, Peridinin-Chlorophyll-Protein (PerCP), and Phycoerythrin (PE).

5. The quality control slide of claim 1, wherein the quality control slide of a cell counting device comprises a jig which provides a space in which the fluorescent layer is formed, protects side walls of the slide, and is bonded to the slide.

6. The quality control slide of claim 5, wherein the jig is bonded to the side walls of the slide and is bonded to an adhesive layer formed on a portion of the thin film layer.

7. The quality control slide of claim 1, wherein a size of the cell-patterned region is adjustable by considering intensity of the fluorescence emitted from the fluorescent layer or microscope magnification.

8. A method for manufacturing a quality control slide of a cell counting device, the method comprising:
a depositing step of depositing a thin film layer onto a base layer;
a coating step of applying a photoresist in a solution state onto the thin film layer, heating the photoresist to evaporate a solvent, and exposing only necessary portions to ultraviolet rays;
a developing step of dissolving the portions of the photoresist that have reacted with the ultraviolet rays in the coating step;
an etching step of dissolving the thin film layer in portions onto which the photoresist is not applied by using an etchant after the developing step; and
a remaining photoresist removing step of removing the photoresist remaining on the thin film layer after the etching step.

9. The method of claim 8, wherein in the depositing step, the thin film layer comprises two or more layers, wherein each of the layers is deposited with a different type of metal.

10. The method of claim 8, further comprising:
a bonding step of bonding a jig which provides a space, in which a fluorescent layer is formed, and protects side walls of the base layer after the remaining photoresist removing step.

11. The method of claim 8, further comprising:
a fluorescent layer forming step of forming a fluorescent layer by adding a fluorescent composition onto the thin film layer which has undergone the remaining photoresist removing step.

12. The method of claim 11, wherein the fluorescent composition comprises a transparent polymer resin, a curing agent, a fluorescent dye, and an organic solvent.

13. The method of claim 11, wherein the fluorescent composition is prepared by mixing a transparent polymer resin with a curing agent to prepare a transparent polymer resin solution, adding a fluorescent dye emitting in a target wavelength range to an organic solvent to prepare a fluorescent dye solution, mixing the transparent polymer resin solution and the fluorescent dye solution at atmospheric pressure, and removing microbubbles in a vacuum.

14. The method of claim 12, wherein the transparent polymer resin is a silicone-based polymer.
